# EUROPÄISCHE PATENTANMELDUNG

(11) **EP 1 291 675 A2**
(43) Veröffentlichungstag der Anmeldung: **12.03.2003**
(21) Anmeldenummer: 02016710.2
(22) Anmeldetag: 26.07.2002
(51) Int. Cl.: G01T 1/105

(54) **Vorrichtung zum Ablesen eines Dosimeters**

(30) Priorität: 08.09.2001 DE 10144161
(71) Anmelder: FORSCHUNGSZENTRUM JÜLICH GMBH, 52425 Jülich (DE)
(72) Erfinder: Harings, Josef, 50169 Kerpen (DE)

(57) **Zusammenfassung**

Die Erfindung betrifft eine Vorrichtung zum Ablesen eines Stabdosimeters. Sie umfaßt eine Aufnahmeeinheit zur Aufnahme und Positionierung des Stabdosimeters, eine Beleuchtungseinheit, die Licht in ein Ende des Stabdosimeter leitet, eine elektronische Kamera, die am anderen Ende des Stabdosimeters angebracht ist und ein Bild der Skala innerhalb des Stabdosimeters aufzunehmen vermag, sowie ein Mittel, welches aus dem Bild der Skala einen Dosiswert zu ermitteln vermag. Vorteilhaft liegt der durch diese Vorrichtung ermittelte Dosiswert dabei in elektronischer Form vor.

## Beschreibung

Die Erfindung betrifft ein Verfahren zum Ablesen eines Dosimeters, insbesondere eines Stabdosimeters, sowie eine dazu geeignete Vorrichtung.

### Stand der Technik

Dosimeter sind Geräte zur Messung der Photonenäquivalentdosis und Photonenäquivalentdosisleistung von Röntgen- und Gamma-Strahlung im Energiebereich von typischerweise 6 keV bis 7,5 keV (ältere Geräte lagen bei 18 kev bis 3 MeV).
Als Personendosimeter bezeichnet man solche Geräte, die von Personen direkt getragen werden. Anforderungen an solche Dosimeter sind unter anderem eine leichte Bedienbarkeit, geringes Gewicht und kleine Abmessungen.
Es gibt zahlreiche Dosimetertypen, beispielsweise Stabdosimeter, Filmdosimeter, Phosphatglasdosimeter, Thermolumineszenzdosimeter und Elektronische Dosimeter. Elektronische Dosimeter ermöglichen die elektronische Anzeige von Dosis, Dosisleistung und Aufenthaltszeit.
Diese können zusätzlich mit Alarmschwellen für Dosis, Dosisleistung und Aufenthaltszeit ausgerüstet sein.

Ein Stabdosimeter ist ein Meßgerät in Stabform zur Bestimmung der Dosis ionisierender Strahlung und aufgrund seines geringen Preises weit verbreitet. Die Entladung eines aufgeladenen Kondensators ist ein Maß für die vom Träger des Dosimeters empfangene Dosis.

Nachteilig können Stabdosimeter jedoch nicht elektronisch abgelesen werden. Das Dosimeter wird zum Ablesen gegen das Licht gehalten und die Skala optisch abgelesen. Dieses Verfahren ist nachteilig zeitaufwendig und nicht objektiv. Alternative elektronische Personendosimeter, die diese Nachteile nicht aufweisen, sind demgegenüber sehr kostspielig.

### Aufgabe und Lösung

Aufgabe der Erfindung ist es, eine preiswerte und genaue Ableseeinheit für handelsübliche Stabdosimeter zu schaffen, die zudem die Daten in elektronisch verwertbarer Form liefert. Weiterhin ist es die Aufgabe, ein Verfahren zum Abselen eines Stabdosimeters zur Verfügung zu stellen, welches die abgelesenen Dosiswerte in elektronischer Form bereitstellt.

Die Aufgabe wird gelöst durch eine Vorrichtung mit der Gesamtheit der Merkmale des Hauptanspruchs sowie durch ein Verfahren gemäß Nebenanspruch. Vorteilhafte Ausgestaltungen ergeben sich aus den jeweils darauf rückbezogenen Ansprüchen.

### Gegenstand der Erfindung

Die Vorrichtung zum Ablesen eines Stabdosimeters umfasst eine Aufnahmeeinheit zur Aufnahme und Positionierung eines Stabdosimeters, eine Beleuchtungseinheit, die Licht in ein Ende des Stabdosimeters leitet, eine elektronische Kamera, die am anderen Ende des Stabdosimeters angebracht ist und ein Bild der Skala innerhalb des Stabdosimeters aufzunehmen vermag, sowie ein Mittel, welches aus dem Bild der Skala einen Dosiswert zu ermitteln vermag.

Die Aufnahmeeinheit dient der exakten und reproduzierbaren Positionierung des Stabdosimeters in Bezug zur Beleuchtungseinheit und der Kamera. Dies kann beispielsweise durch konisch zulaufende Ringe realisiert werden, die eine Zentrierung des Stabdosimeters erlauben. Vorteilhaft liegt die Position des Stabdosimeters so, daß an einem Ende des Stabdosimeters die Beleuchtung angeordnet ist, und am gegenüberliegenden Ende des Dosimeters die elektronische Kamera. Dabei muß die Positionierung der Kamera, der Beleuchtung und des Stabdosimeters nicht starr sein. Alternativ kann das Stabdosimeter auch in eine Position zwischen Kamera und Beleuchtung eingebracht werden. Oder aber das Stabdosimeter wird beispielsweise oberhalb, bzw. unterhalb der Kamera positioniert, und die Beleuchtung wird in eine entsprechend geeignete Position geschwenkt oder geschoben.

Erfindungsgemäß sind Kamera, Dosimeter und Beleuchtung derart zueinander ausgerichtet, daß die Skala innerhalb des Dosimeters gut beleuchtet wird, und die Kamera ein Bild der Skala aufzunehmen vermag.

Das erfindungsgemäße Mittel zur Ermittlung eines Dosiswertes aus dem Bild der Skala wird beispielsweise durch einen Rechner mit einem Bildverarbeitungsprogramm zur Verfügung gestellt. Ein solches Programm ist beispielsweise in der Lage, die Pixelpositionen des Zeigers und der Skala, bzw. des Anfangs und des Endes der Skala zu ermitteln. Die Positionen, bzw. die Abstände von Zeiger und Skala werden ins Verhältnis gesetzt, und der entsprechende Dosiswert wird ermittelt.

### Spezieller Beschreibungsteil

Nachfolgend wird der Gegenstand der Erfindung anhand von einer Figur und einem Ausführungsbeispiel näher erläutert, ohne daß der Gegenstand der Erfindung dadurch beschränkt wird.

Üblicherweise werden Stabdosimeter an Steckbrettern aufbewahrt, in denen einzelne Stabdosimeter in speziellen Halterungen fixiert sind. Ein Kontakt in der Halterung überwacht, ob das Dosimeter entnommen wird. Sobald ein Stabdosimeter aus der Halterung entnommen wird, wird beispielsweise über einen Computermonitor durch ein Display dazu aufgefordert, das Stabdosimeter in die erfindungsgemäße Ablesevorrichtung einzusetzen.

Die Ablesevorrichtung besteht in diesem Ausführungsbeispiel aus trichterförmigen Ringen, die die zentrale Positionierung des Dosimeters über einer Kamera und entsprechender Beleuchtung garantiert. Die Beleuchtung wird eingeschaltet, nachdem das Dosimeter zwischen den beiden Fixierringen eingesetzt worden ist, und die Kamera nimmt das Bild der Skala im Dosimeter auf. Dieses Bild wird anschließend mit einer entsprechenden Software analysiert. Dazu geeignet ist u. a. eine Bildverarbeitungssoftware, die in dem aufgenommenen Bild die Pixelposition des Zeigers in Bezug auf die Skala ermittelt. Beispielsweise wird die Pixelposition vom Skalenanfang und Skalenende ermittelt, und die Zeigerposition mathematisch entsprechend der Pixelgenauigkeit, bzw. der Auflösung der Kamera entsprechend, berechnet.

Das Ergebnis kann beispielsweise verschlüsselt werden, und optional mit Datum und Uhrzeit versehen zu einem zentralen Computer gesendet und dort registriert werden. Nach einer Speicherung der Daten, können die Daten auf dem Steckbrettprozessor gelöscht werden. Sobald die Ablesung stattgefunden und die Daten übertragen sind, wird das Messergebnis am Display angezeigt. Das Stabdosimeter kann anschließend aus der Ausleseeinheit entfernt werden. Vorteilhaft wird das Steckbrettdisplay und alle Kontakte in den Wartezustand versetzt. Das abwesende Stabdosimeter wird als abwesend registriert.
In einem Fehlerfall, z. B. wenn das Dosimeter verschmutzt ist oder wenn der Faden nicht sichtbar ist, ist eine Ermittlung des Dosiswertes mit dem Softwareprogramm nicht möglich und es kann eine Fehlermeldung erfolgen. Das Dosimeter kann in solchen Fällen beispielsweise mit Hochspannung zurückgesetzt, gereinigt oder auch ausgetauscht werden.

Vorteilhaft wird ein Stabdosimeter umlaufend mit einem Balkencode versehen, der bei der Ablesung zusätzlich eingelesen wird.

Die erfindungsgemäße Vorrichtung zum Ablesen eines Dosimeters ermöglicht eine schnellere Aufnahme und Verarbeitung der abgelesenen Dosiswerte. Zudem wird die Fehlertoleranz beim Ablesen durch ein elektronisches System regelmäßig verringert. Die bislang eingesetzten Stabdosimeter können vorteilhaft weiter benutzt werden, ohne daß auf eine elektronische Erfassung der Daten verzichtet werden muß.

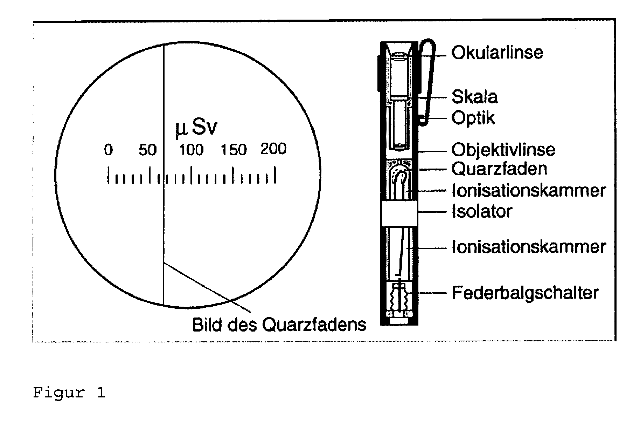

Die Figur 1 zeigt ein Stabdosimeter gemäß dem Stand der Technik aus dem "Lexikon der Kernenergie", W. Koelzer, Forschungszentrum Karlsruhe GmbH, 2001, Seite 185. Die Abbildung zeigt auf der rechten Seite ein Stabdosimeter im Längsschnitt sowie im linken Bereich eine Abbildung eines Bildes der Skala eines Stabdosimeters mit einem Quarzfaden als Zeiger.

## Patentansprüche

1. Vorrichtung zum Ablesen eines Stabdosimeters, umfassend
- eine Aufnahmeeinheit zur Aufnahme und Positionierung des Stabdosimeters,
- eine Beleuchtungseinheit, die Licht in ein Ende des Stabdosimeter leitet,
- eine elektronische Kamera, die am anderen Ende des Stabdosimeters angebracht ist, und ein Bild der Skala innerhalb des Stabdosimeters aufzunehmen vermag, sowie
- ein Mittel, welches aus dem aufgenommenen Bild der Skala einen Dosiswert zu ermitteln vermag.

2. Vorrichtung nach vorhergehenden Ansprüchen 1 bis 2, bei dem das Mittel einen Rechner sowie ein Bildverarbeitungsprogramm umfaßt.

3. Verfahren zum Ablesen eines Stabdosimeters mit den Schritten,
- das Stabdosimeter wird in einer Aufnahmevorrichtung positioniert,
- Licht wird von einem Ende durch das Stabdosimeter geleitet,
- eine elektronische Kamera am anderen Ende des Stabdosimeters nimmt ein Bild der Skala innerhalb des Dosimeters auf,
- ein Bildverarbeitungsprogramm bestimmt aus dem aufgenommenen Bild die Position der Skala sowie die Zeigerposition,
- mit Hilfe dieser Daten wird einen Dosiswert ermittelt, der sich aus dem Verhältnis von Zeigerposition zur Gesamtskala ergibt,
- der Dosiswert wird angezeigt und/oder gespeichert.
